(19)

**Europäisches Patentamt**
**European Patent Office**
**Office européen des brevets**

(11)  **EP 4 603 214 A1**

(12)  # EUROPEAN PATENT APPLICATION

(43) Date of publication:
 **20.08.2025  Bulletin 2025/34**

(21) Application number: **25169196.0**

(22) Date of filing: **03.05.2022**

(51) International Patent Classification (IPC):
 **B22F 10/322** (2021.01)   **B22F 10/28** (2021.01)
 **B22F 10/85** (2021.01)   **B22F 12/70** (2021.01)
 **B29C 64/153** (2017.01)   **B29C 64/371** (2017.01)
 **B33Y 10/00** (2015.01)   **B33Y 30/00** (2015.01)
 **B33Y 50/02** (2015.01)   **B22F 12/45** (2021.01)
 **B22F 10/77** (2021.01)

(52) Cooperative Patent Classification (CPC):
 (C-Sets available)
 **B22F 10/322; B22F 10/28; B22F 10/32;**
 **B22F 10/77; B22F 10/85; B22F 12/10; B22F 12/45;**
 **B22F 12/70; B22F 12/90; B29C 64/153;**
 **B29C 64/25; B29C 64/364; B33Y 10/00;**
 **B33Y 30/00; B33Y 50/02;**                          (Cont.)

(84) Designated Contracting States:
 **AL AT BE BG CH CY CZ DE DK EE ES FI FR GB**
 **GR HR HU IE IS IT LI LT LU LV MC MK MT NL NO**
 **PL PT RO RS SE SI SK SM TR**

(30) Priority:  **07.05.2021  DE 102021111964**

(62) Document number(s) of the earlier application(s) in
 accordance with Art. 76 EPC:
 **22727793.6 / 4 334 060**

(71) Applicant: **Nikon SLM Solutions AG**
 **23560 Lübeck (DE)**

(72) Inventors:
 • **Hoppe, Birk**
  **23560 Lübeck (DE)**
 • **Neumann, Karsten**
  **23560 Lübeck (DE)**
 • **Schmithüsen, Tobias**
  **23560 Lübeck (DE)**

(74) Representative: **Lohr, Jöstingmeier & Partner**
 **Patent- und Rechtsanwälte mbB**
 **Junkersstraße 3**
 **82178 Puchheim/München (DE)**

Remarks:
 This application was filed on 08-04-2025 as a
 divisional application to the application mentioned
 under INID code 62.

(54)  **PROCESS CHAMBER FOR AN ADDITIVE MANUFACTURING APPARATUS AND METHOD FOR OPERATING THE PROCESS CHAMBER**

(57)   A process chamber housing 1 for an additive manufacturing apparatus with a process chamber having a bottom 9, a ceiling 10 and side walls 11, 12, 13, jointly enclosing a volume 51 of the process chamber 5, an inert gas inlet 6 in a front wall 11 of the side walls 11, 12, 13, configured to provide an inert gas into the process chamber 5 and an inert gas outlet 7 in a rear wall 12 of the side walls 11, 12, 13 configured to release the inert gas out of the process chamber 5, provides for an increased beam quality if the inert gas inlet 6 and the inert gas outlet 7 are positioned at oppo-site sides of the opening 94 and both face towards the each other, thereby being configured establish an inert gas flow 2 in a main flow direction 2 from the inert gas inlet 6 over the opening, to the inert gas outlet 7.

Fig. 1

**(Cont. next page)**

(52) Cooperative Patent Classification (CPC): (Cont.)
B22F 2999/00; Y02P 10/25

C-Sets
B22F 2999/00, B22F 10/322, B22F 2203/11,
B22F 2203/13;
B22F 2999/00, B22F 12/10, B22F 12/70;
B22F 2999/00, B22F 12/70, B22F 2201/12

**Description**

**Field of the invention**

The invention relates to additive manufacturing by fusing a powder bed. In particular, the invention relates to a process chamber housing for an additive manufacturing apparatus. The process chamber housing comprises a process chamber with a bottom, a ceiling and side walls, jointly enclosing a volume of the process chamber. An inert gas inlet, e.g. in a front wall of the side walls, enables to provide an inert gas into the process chamber and an inert gas outlet, e.g. in a rear wall of the side walls, is provided to release the inert gas out of the process chamber.

**Description of the related art**

Additive manufacturing is a growingly important and capable method of manufacturing 3D workpieces. There are different variants of additive manufacturing, but herein we focus on methods and an apparatus for joining powder particles by selectively heating powder particles, e.g., on top of a bed of powder particles to adhere some of the particles to each other. The powder particles are adhered to each other by sintering, fusing, and/or welding (hereinafter jointly "fused"). The heat for these processes is typically provided by focused radiation, for example by an electron beam or by a laser beam. These beams selectively heat portions of the top layer of the powder bed, thereby attaching particles of the top layer to particles of a preceding layer. This process is generally referred to as powder bed fusion process or simply powder-fusion process. Herein, we will not distinguish between different types of radiation and will simply refer to *"beam"* or *"beams"*.

Modern apparatuses for powder-bed fusion have a housing with a process chamber. The process chamber has a support-opening for accommodating a movable support. Initially, a thin layer of powder is applied to the support. This is mostly accomplished by a recoater (see e.g. WO 2018/156264 A1, WO 2017/143145A1, EP 1 234 625 A and DE102006056422B3, to name only a few.) Once a layer has been subjected to the beam treatment a subsequent powder layer is applied, which then again is selectively fused. This process is iterated until additive manufacturing of the workpiece has been completed. Further treatment of the workpiece like e.g. grinding, cutting, milling, etc., may still be required.

As taught, e.g. by EP 3 321003, the process chamber is advantageously filled with an inert gas. During the additive manufacturing process, the inert gas flows from a gas inlet over the bottom and thus over the top layer of powder on the support to a gas outlet. EP 3 321 003 aims for an essentially laminar flow of inert gas to thereby remove fumes, smoke or other side products of the fusing process (hereinafter jointly "smoke"). To this end, the inlet opening is made of a porous material to thereby release an essentially homogenous flow of the inert gas through the process chamber. The choice of the inert gas has been discussed in WO 2012/3828 A1, WO2020/064147A1, WO2020/064148A1 or WO 2020/126086 A1 and specifically an Argon (Ar) or Nitrogen ($N_2$) atmosphere with an oxygen concentration below 1000ppm (parts per million) have been suggested. The addition of Helium (He) to the inert gas atmosphere has been suggested as well to allow for higher laser scanning speeds.

The initial powder bed fusion process suffered from being slow and there have been many attempts to decrease the manufacturing time, e.g. by using multiple beam sources simultaneously to thereby decrease the costs associated with a given additively manufactured workpiece. The difficulty of this approach is that a second beam may not fuse any portion of the powder bed while a smoke plume originating from the operation of a first beam is located in between the second beam source and the corresponding portion of the powder bed without severely compromising the quality of the workpiece. These smoke plumes appear to distort, absorb and scatter the beams and accordingly many concepts have been developed to avoid fusing of portions of the powder bed being shadowed by smoke plumes originating from scanning the powder bed by other beams (see e.g., WO 2016/075026 A or WO 2020/178216A).

**Summary of the invention**

The problem to be solved by the invention is to improve the powder bed process.

Solutions to the problem are described in the independent claims. The dependent claims relate to further improvements of the invention.

The process chamber housing comprises a process chamber with a bottom, a ceiling and side wall. The bottom, the ceiling and the side wall jointly enclose a volume of the process chamber. In a preferred embodiment, at least one inert gas inlet is in a front wall of the side walls and configured to provide an inert gas into the volume of the process chamber. At least a portion of the inert gas being provided to the volume can be removed via at least one inert gas outlet in a rear wall of the side walls, hence the inert gas outlet is configured to release the inert gas out of the process chamber. Alternatively or additionally, the gas inlet and/or the gas outlet may be provided in the ceiling, the bottom, in different or the same one of the side walls. The gas inlet and the gas outlet may be arranged preferably at opposite sides of the process chamber.

The bottom may have an opening. The opening may be delimited by opening walls. Preferably, a vertically movable support for supporting the powder bed and hence a three-dimensional (3D) object being manufactured by selectively fusing the powder bed may be located in between of the opening walls. As already apparent, the support is preferably movably supported in the opening. For example, the support may be retracted further into the opening (i.e. lowered assuming a horizontal support surface) prior to adding a new layer of powder to the powder bed.

The opening walls may be and/or provide linear bearings restricting the movement to a direction at least essentially perpendicular to the edge being formed by the transition between the bottom and the opening walls. At least essentially perpendicular indicates that perpendicular is preferred, but small deviations, e.g. smaller 1°, 2.5°, 5° and/or 10° can be accepted. The opening walls may enclose a space, for example a box or a circular cylinder. This space may accommodate already fused portions of the powder bed. The opening walls may be configured to be removed from the process chamber housing. This enables to simply replace the opening walls after a workpiece has been manufactured by an empty set of walls.

Preferably, the inert gas inlet and the inert gas outlet are positioned at opposite sides of the opening and face towards each other. This thus enables to provide a main inert gas flow in a main flow direction by injecting an inert gas via the (first) inert gas inlet while removing inert gas from the volume via the (first) inert gas outlet, or in other words by providing a pressure gradient from the inert gas inlet to the inert gas outlet. This main inert gas flow is preferably at least essentially parallel to an up-facing surface of the bottom and/or the optional support. The main inert gas flow may as well have an upward or downward component. In a preferred example, the direction of the main inert gas flow has a non-vanishing component being parallel to the bottom and/or the support. This non-vanishing component provides for a direction in which smoke plumes being produced when scanning the powder bed with the beam are inclined relative to the vertical.

In a preferred example, the gas inlet is connected to an inert gas source providing a He-comprising inert gas. The inert gas source is preferably configured to provide an inert gas comprising at least Helium (He) and one of another noble gas (i.e. at least one of Neon (Ne), Argon (Ar), Krypton (Kr), Xenon (Xe), Radon (Rn) and/or Nitrogen (N2). The inert gas source is configured to provide the He-comprising inert gas from the inert gas source into the volume of the process chamber. Particularly preferred, the inert gas source provides a gas comprising at least one of 20%, 30%, 40%, 50%, 60%, 70%, 80%, 90%, 95%, 98%, 99% He and/or Ne, wherein the percentage relates to the amount mol He and/or Ne, respectively, relative to the total amount of gas in mol.

Unexpectedly it turned out that replacing Ar or $N_2$ by He and/or Ne enables to fuse portions of the powder bed with a second beam being emitted by a second beam source while smoke being produced by a first beam being emitted by first beam source is located in between of the beam outlet of a second beam source and the portion of the powder bed to be fused. Hence in an embodiment the invention comprises the step of fusing a powder bed using at least two beams, while at least one second beam is controlled to fuse a location of the powder bed being covered by a smoke plume being generated by fusing another portion of the powder bed with another beam (the at least one first beam), wherein the smoke plumes are removed from the process chamber by a main inert gas flow, wherein the main inert gas flow is established by an inert gas comprising at least 20% of He and/or Ne, and/or having a density below at least one of 1,4 kg/m$^3$ 1,2 kg/m$^3$, 1 kg/m$^3$, 0.6 kg/m$^3$, 0.4 kg/m$^3$ and 0.2 kg/m$^3$ . The density references preferably to normal conditions (0°C, 1013hPa) but may as well reference to the actual conditions in the process chamber. In other words, the at least one second beam source operates downstream of the beam spot of the another beam source, wherein downstream relates to the main inert gas flow direction over the powder bed. Being covered is intended to express that the smoke plume is in the beam path of the at least one second beam. As already mentioned, the beam sources are preferably laser beam sources, but not limited to these. The usage of the term "laser beam" or "laser beam source" herein is to be understood as a preferred example of for "beam" or "beam source". In operation the beam source may be pivoted to thereby scan locations to be fused on the powder bed. For example, a mirror being pivoted to project a laser beam onto said locations on the powder bed can be considered as a beam source, even if the beam is not generated by the mirror itself. In this application the location from which beam is emitted towards a location of the powder bed is relevant, not the type of beam or the beam generation device.

Different from all prior art teachings, operating in the smoke plume being produced by scanning a portion of the powder bed with the first beam is made possible by replacing at least a portion of the Ar and/or $N_2$ by He and/or Ne. Further investigations revealed that the smoke in these smoke plumes has a comparatively low impact on the quality of a fused area being fused by a penetrating a smoke plume of produced by another beam. These observations render it plausible that the heat induced density change in the smoke plumes are responsible for laser beam distortions leading to a defocusing of an otherwise well focused beam and/or to a change of the beam profile and/or to change of the beam intensity distribution over the beam profile. The lower density of He and/or Ne combined with the increased heat conductivity of He and/or Ne, provides for lower density gradient between hotter and colder portions of the inert gas flow and hence to a reduced effect of defocusing. The positive effect of reducing laser beam distortion due to thermal inhomogeneities in the inert gas flow can be further enhanced by reducing the amount of gas in the volume, i.e. by operating the process chamber at pressures below ambient pressure. Lowering the pressure significantly may even allow to use Ar and/or $N_2$ as inert gas (or to simply use air), i.e. to omit He and/or Ne. Another advantage of lowering the pressure (i.e. of reducing the amount of gas molecules in the volume) is that the flow speed of the inert gas flow can be increased without shifting (blowing away) powder particles previously deposited on the powder bed by the inert gas flow.

Particularly preferred, the inert gas has a thermal conductivity at or above at least one of

$$0.15\frac{W}{m\cdot K}, 0.1\frac{W}{m\cdot K}, 0.05\frac{W}{m\cdot K}, 0.025\frac{W}{m\cdot K} \quad \text{and}$$

$$0.02\frac{W}{m\cdot K}$$ at normal condi-tions (0°C, 1013hPa) and/or a thermal conductivity at or above at least one of

$$0.15\frac{W}{m\cdot K}, 0.1\frac{W}{m\cdot K}, 0.05\frac{W}{m\cdot K}, 0.025\frac{W}{m\cdot K} \quad \text{and}$$

$$0.01\frac{W}{m\cdot K}$$ at the conditions in the process chamber.

In a preferred example, the inert gas flow may have a flow speed in the main flow direction may and that the mean flow speed measured 0.5cm over the opening is above 0.75m/s preferably above 1 m/s and/or below 4m/s preferably below 3 m/s even more preferred below 2.5m/s at 1013hPa. These boundaries may preferably be increased if the gas pressure in the volume of the process chamber is decreased and/or if the molar mass of the gas is decreased.

In a preferred example, the process chamber comprises at least one oxygen sensor and/or a gas density sensor and/or thermal conductivity sensor and/or thermal capacity sensor configured to determine a value being representative for the thermal conductivity and/or thermal capacity, respectively of the inert gas. At least one of these sensors is preferably located in the bottom portion of the volume. For example, at least one of these sensors may be located on the bottom and/or in a recess of the bottom and/or below a distance of 5cm above the bottom and/or on the support and/or below the support, and/or at or within at least one of 10cm, 5cm, 2.5cm, 1cm, 0.5cm from the edge encircling the opening. In another example, at least one of these sensors is preferably located in the (first) inert gas outlet, preferably at the bottom of the (first) inert gas outlet and/or within at least one of 10cm, 5cm, 2.5cm, 1cm, 0.5cm from the edge encircling (first) inert gas outlet. Each of these example locations enable to measure the Oxygen concentration in the vicinity of the powder bed. Oxygen has a higher mass per molecule (16u) and will therefore accumulate in the bottom portion of the volume if He (4u) and/or Ne (10u) is used as inert gas (as usual, u is the unified atomic mass unit). Thus, potential leaks or impurities provided by the gas source can be detected quickly. Further, the measurement is as representative as possible for the oxygen level right over the powder bed. In addition or alternatively, at least one of the sensors may be located in a duct connecting at least one inert gas outlet with at least one inert gas inlet.

The at least one Oxygen sensor and/or a gas density sensor and/or thermal conductivity sensor and/or thermal capacity sensor is preferably located in the inert-gas flow through the chamber. Particularly preferred is the respective sensor oriented at least essentially parallel to the inert gas flow, wherein at least essentially parallel indicates that parallel is preferred but that deviations within a few degrees (e.g., within $\pm30°$, $\pm20°$, $\pm10°$, $\pm5°$, $\pm2.5°$, $\pm1°$ or 0°) can be accepted,

The at least one Oxygen sensor and/or a gas density sensor is preferably coupled to a process chamber controlling device, i.e. to an electronic circuitry for controlling operation of the process chamber and/or an entire additive manufacturing apparatus with the process chamber (hereinafter simply "controller"). In particular if, e.g. the oxygen level is above a predefined threshold, the controller may increase the flow speed of the inert gas flow over the opening, e.g. by increasing the power provided to a vacuum pump being connected to the inert gas outlet and/or by opening a throttle valve upstream of the inert gas inlet. Further, prior to fusing the powder bed, the process chamber is preferably flooded with the inert gas. Once the oxygen level is below a predefined threshold the inert gas may be circulated from the inert gas outlet to the inert gas inlet using an inert gas pump to thereby establish the inert gas flow.

In a preferred example, the process chamber may comprise a gas component concentration sensor being configured to measure a value being representative for at least one of the concentrations of $O_2$, $N_2$, He, Ne, Ar, Kr, Xe, Rn and/or for a ratio of at least two of these gases in the inert gas. The gas component sensor may be located or have a gas inlet at the positions indicated above for the oxygen sensor. The above referenced sensors can be considered as examples for a gas component concentration sensor. In other words, a gas component concentration sensor may be or comprise at least one of an Oxygen sensor and/or a gas density sensor and/or a thermal conductivity sensor and/or thermal capacity sensor and/or a gas chromatograph and/or a spectrometer and/or gas-analyzer, in particular He-analyzer. Further, it is noted that partial pressure values of $O_2$, $N_2$, He, Ne, Ar, Kr, Xe, Rn may be considered as representative for at least one of the concentrations of these gases if the total pressure is known. A simple and yet efficient way to measure concentrations is thus to measure the partial pressure of at least one of these gases, e.g. via the diffusion rate through a semi-permeable membrane. For example, if a semi-permeable membrane is permeable only for He, the diffusion rate through the membrane at a given differential pressure between the spaces being separated by the membrane can be used to determine the partial pressure of He in the inert gas.

The gas component concentration sensor is preferably coupled to the process chamber controlling device by a data line. Hence, the values obtained by the gas component concentration sensor may be made available to the process chamber controlling device.

In any embodiment the method may comprise feeding at least a portion of the inert gas being removed through the inert gas outlet via the inert gas inlet to the process chamber. This is as well referred to as recycling or circling the inert gas.

A method for fusing at least a portion of the powder bed may thus comprise to control the composition of an inert gas flow being established above the powder bed.

The method may comprise determining the concentration and/or partial pressure of at least one of $O_2$, $N_2$, He, Ne, Ar, Kr and Xe in the inert gas flow established above the powder by determining the concentration and/or partial pressure of at least one of $O_2$, $N_2$, He, Ne, Ar, Kr and Xe in the inert gas in the process chamber and/or being removed from the process chamber via the at least one inert gas outlet and/or being provided via the inert gas inlet to the process chamber. The method may further comprise obtaining a measurement value being representative for the concentration and/or partial pressure of at least one of $O_2$, $N_2$, He, Ne, Ar, Kr and Xe in the inert gas and comparing this measurement value with a lower limit and/or with an upper limit for the concentration and/or the partial pressure of the respective at least one of $O_2$, $N_2$, He, Ne, Ar, Kr and Xe in the inert gas. It is noted that $O_2$ is not inert and hence should not be comprised in the inert gas. But monitoring the unintended $O_2$-concentration may be used to increase the concentration(s) of inert components of the inert gas to thereby reduce the partial pressure and the concentration of the $O_2$, what can be considered as effectively removing unintended $O_2$ from the process chamber and hence the fusing process.

In case said comparing provides that this measurement value is below a lower limit, the method may comprise adding the corresponding depleted component to the inert gas stream in the process chamber, e.g., by adding it to an inert gas stream circling from the inert gas outlet to the inert gas inlet and through the process chamber, while adding no or less of at least one other component of the inert gas mixture to the inert gas mixture. "less" in this context references to the amount of the depleted component, i.e. the amount added of the at least other component being added is less than the amount added of the depleted component.

Similarly, in case said comparing provides that this measurement value is above an upper limit, the method may comprise adding the at least one other component to the inert gas in the process chamber, e.g. by adding it to an inert gas stream fed from the inert gas outlet via duct to the inert gas inlet (thereby into the process chamber) than said component having a measurement value above the upper limit, while adding no or less of said component having a measurement value above the upper limit. Similarly to the above "less" references to the amount the at least one other component is added. In other words, more of the at least one other component is added than of the component having a measurement value above the upper limit.

This method allows to partially and selectively replenish only those components of the inert gas that are underrepresented in a given composition as defined by the upper and lower boundaries for the respective components. This helps to keep operating costs low, while maintaining high workpiece quality. These method steps are based on the observation that for practical purposes the inert gas is often a mixture of essentially He and/or Ne with Ar and/or with $N_2$ wherein the concentrations of He, Ne, Ar, and $N_2$ in the mixture are well defined. However, He and Ne diffuse at a significantly higher rate through the duct wall and the other confining structures of the process chamber housing. The method thus allows to maintain the partial He and/or Ne-pressure and/or the He and/or Ne-concentration in the inert gas within given limits, while not replacing He and/or Ne-depleted inert gas from the process chamber by (costly) "fresh" inert gas. By measuring a value being representative for the, e.g., He and/or Ne-concentration (and/or partial pressure) and adding only He and/or Ne to the inert gas circling through the process chamber housing, if a He and/or Ne-depletion below the lower limit for He and/or Ne, respectively, has been observed. This approach can be used for any other of the inert gases mentioned above, i.e. curing a He- and/or Ne-depletion is only a preferred example. Any other depletion can be resolved by adding the depleted component(s), preferably only.

These steps of controlling the composition of an inert gas flow being established above the powder bed may be executed by the process chamber controlling device, as well referred to as "controller". In other words, the process chamber controlling device may be configured to execute any of the above method steps, be it directly or by controlling and or communicating with corresponding components, like, e.g., a gas component concentration sensor.

The corresponding process chamber housing may thus comprise the process chamber controlling device. The process chamber controlling device may be connected to at least one gas component concentration sensor, e.g., via a data line and/or any other data transmission means. This gas component concentration sensor may be located in the process chamber. Alternatively or in addition, the (or another) gas component concentration sensor may be located at, attached to and/or integrated in a duct connecting the inert gas outlet with the inert gas inlet.

The process chamber may further comprise an inert gas component source comprising only a component or a limited number of components of the inert gas in the process chamber. For example, the inert gas component source may comprise only He and/or Ne but no Ar or $N_2$ if the inert gas is a mixture of all three gases. In practice it is sufficient if the concentration of the depleted inert gas component in the gas provided by the inert gas component source is greater than the preset or intended concentration of the depleted component in the inert gas, as in this case adding the gas mixture from the inert gas component source increases the concentration of component being depleted in the inert gas circling through the process chamber and the duct connecting the inert-gas outlet with the inert-gas inlet.

The process chamber may also comprise more than one inert gas component sources, comprising respectively one different inert gas component and/or comprising different inert gas mixtures.

As usual "limited number of components" means that at least one component of the (intended) inert gas mixture is not comprised or underrepresented in the inert gas component source. The inert gas component source may be fluidly connected via at least one inert gas component valve with the inert gas- inlet or with a separate gas inlet, e.g. via a branch of the duct. A fluid connection via the duct is preferred, as the concentrations of the components of the inert gas being provided to the process chamber homogenize. In other words, the inert gas in the process chamber has a more homogenous composition.

The process chamber controlling device may be connected via e.g. at least one control line and/or a contactless data connection to the inert gas component valve, thereby being enabled to open and close the inert gas component valve.

In another preferred example, the process chamber comprises a heater configured to heat the temperature of at least a portion of the inert gas flow through the process chamber to or above at least one of 25°C, 40°C, 60°C, 80°C, 100°C, 150°C, 250°C, 300°C, 350°C, 400°C, 450°C, 500°C, 600°C, 700°C, 800°C, 900°C, 1000°C.When using higher temperatures, the process chamber housing is preferably thermally isolated. By this increase of the gas temperature, the temperature gradient in a smoke plume is decreased and thus beam distortion of the smoke plume is reduced if not neglectable small.

As already explained above, the process chamber preferably comprises a pressure controller, configured to maintain the pressure inside the process chamber below ambient pressure outside the process chamber and/or at or below at least one of 1000hPa, 900hPa, 800hPa, 700hPa, 600hPa, 500ha, 400hPa, 300hPa, 200hPa, 100hPa. The pressure controller may be integrated or form a part of a process chamber controller. In another preferred example, the pressure in the process chamber is above ambient pressure, thereby ensuring that no oxygen is sucked accidentally into the process chamber. In another example, the process chamber is enclosed in another housing, and the pressure in the process chamber is below ambient pressure, while the pressure in the volume being defined by the boundary of the process chamber and the another housing is above ambient pressure and in that the gas said volume is as well an inert gas, preferably the same as in the process chamber. This enables to ensure a lower pressure in the process chamber while at the same time reducing the risk that oxygen is accidentally sucked into the process chamber, because the volume between the boundary of the process chamber and the another housing is filled with an inert gas and has a pressure above ambient pressure.

For example, the inert gas outlet may be in fluid communication with a low pressure inlet of a gas pump (e.g. a vacuum pump inlet) e.g. via the above mentioned duct and/or that the inert gas inlet may be in fluid communication with an inert gas source (e.g. the higher pressure gas outlet of the gas pump), wherein a throttle valve may be located upstream of the inert gas inlet. The optional pressure controller may be configured to increase and/or decrease the power provided to the gas pump. It may further be configured to open and/or close the throttle valve, e.g. by powering an actuator. The optional pressure controller may hence as well control the flow speed of the inert gas flow. The optional pressure controller may be connected to at least one pressure sensor and/or flow speed sensor and may control the pressure and/or the flow speed in the process chamber in response to signals being provided by at least one of the pressure sensor and/or the flow speed sensor.

Changing the inert gas may have an impact of the signals being provided by flow speed and/or pressure sensors. This impact may require a recalibration of the sensors when changing the inert gas during manufacturing of a workpiece or between manufacturing of two workpieces. For example, when using an inert gas with an increased heat capacity and/or an increased thermal conductivity an anemometer for measuring the flow speed may require recalibration. For example, a hot wire anemometer experiences better cooling when increasing the thermal conductivity of the inert gas. Accordingly, the resistivity of the hot wire drops, which directly translates in presumably wrong flow speed readings, if the increased thermal conductivity is not considered. Similarly, a change of the (mean) molar mass and/or density of the inert gas may require a recalibration of the flow speed sensor, e.g., when using a vane anemometer or a cup anemometer.

In a preferred example, the process chamber further comprises at least one second gas outlet in at least one of the bottom, the support, the opening walls and the opening bottom. The second gas outlet may be used when replacing a gas(mixture) like air by the inert gas, e.g. by at least one of He and/or Ne and/or Ar and/or $N_2$, which may then preferably be provided to the volume via at least one second inert gas inlet in the ceiling. The use of expensive He and/or Ne or another inert gas can be reduced by each of these measures.

The optional second gas outlet may be connected to a second gas outlet control valve, preferably to a check valve configured to disable gas flow into the process chamber via the second gas outlet. Further, the second gas outlet may be connected by a tube or the like to a gas inlet of a second outlet vacuum pump.

As already apparent, the process chamber preferably comprises at least one (laser) beam entry window, which may be located above the support. In a particularly preferred example, the process chamber further comprises at least one inert gas jet stream inlet nozzle. As will be explained blow in more detail the term "Jetstream" used only to indicate that it is a second as well linguistically distinguishable gas stream flowing above the inert gas stream. The inert gas jet stream inlet nozzle is preferably positioned in the upper portion of the process chamber and is preferably oriented to provide an inert gas jet stream between the window and the support. Particularly preferred, the inert gas jet stream attaches to window surface and/or is directed downwards. This can be obtained by orienting the inert gas jet stream inlet nozzle accordingly, e.g. by orienting is towards the window surface and/or by use of the Coanda effect.

Preferably opposite to the inert gas jet stream inlet nozzle may be at least one inert gas jet stream outlet nozzle, hence as well being positioned to provide an inert gas jet stream between the window and the support.

The inert gas jet stream compensates for the effect that the smoke in a reduced density atmosphere tends to rise higher. The inert gas jet stream protects the window from being polluted by condensed or sublimated smoke, which as well would deteriorate beam quality and hence workpiece quality. The suggested measure thus enables to keep the vertical dimension of the volume reasonable, which reduces operating costs as well as installation costs and last but not least workpiece quality, as an increase in the distance between laser source and the powder decreases workpiece quality, as imperfections in beam focusing become more apparent.

For example, the at least one inert gas jet stream inlet nozzle may have a nozzle outlet opening being oriented parallel within an angle $\alpha_{js}$ to the (first) inert gas inlet, wherein $\alpha_{js} \in A$, and $A = \{30°, 20°, 10°, 5°, 2.5°, 1°, 0.5°, 0°\}$. This measure reduces turbulences in the volume and hence increases efficient smoke removal from the volume.

Preferably, the flow speed of the inert gas jet stream relative to the window is at least 1.1, 1.25, 1.5, 2, 2.5, 3, 3.5, 4. 4. 5, 5, 7.5 and/or 10 times the flow speed of the inert gas flow 0.5cm over the opening. This increased flow speed thus provides for a flow speed gradient from the bottom to the ceiling. This gradient enables to safely remove the smoke without blowing powder from the powder bed towards inert gas outlet.

In preferred example, the temperature of one the at least one optional inert gas jet stream is below the temperature of the main inert gas stream, at least measured at the corresponding nozzle openings. Residues in the smoke can thus condense prior to reaching the window and no or at least less residues in the smoke condense on the window.

In another example, the temperature of one the at least one optional inert gas jet stream is above the temperature of the main inert gas stream, at least measured at the corresponding nozzle openings. This allows to efficiently cool the powder bed by the main inert gas flow flowing preferably at least almost directly over the powder bed. This can be obtained by positioning the lower edge of the (first) inert gas inlet and/or the lower edge of the (first) inert gas outlet at the height of the edge of the support opening and/or at the height of the bottom or slightly above these heights. Slightly above means within at least one of 0.5cm, 1cm, 1.5cm, 2cm and/or 2.5cm above the corresponding reference height. Further, the temperature of the main (first) inert gas flow from the (first) inert gas inlet to the (first) inert gas outlet is preferably below ambient temperature, e.g. at or below at least one of 23°C, 20°C, 18°C, 10°C, 0°, -5°C, - 10°C, -20°C. The lower the temperature, the better is the cooling, i.e. the heat transfer from the powder bed and/or the workpiece to the main inert gas stream. The temperature of the inert gas jet stream may be preferably at or above ambient temperature, e.g. at or above at least one of 25°C, 40°C, 60°C, 80°C, 100°C, 150°C, 250°C, 300°C, 350°C, 400°C, 450°C. This particularly preferred combination of having reduced temperature in the vicinity of the powder bed and an increased temperature above provides for both a good cooling and low beam distortions.

Further, it is preferred, if the vertical thickness of the main inert gas stream or flow is significantly smaller than the vertical thickness of the inert gas jet stream above the main inert gas stream. The vertical thickness of the respective streams can be controlled, e.g. by the vertical dimension of the respective inlet opening. Thus, the vertical dimension $d_2$ of the inert gas jet stream inlet is preferably greater or equal to x-times the vertical dimension $d_1$ of the (first) inert gas inlet, wherein $x \in \{1.5, 2, 2.5, 5, 10,15\}$, i.e. $x \cdot d_1 \leq d_2$.

As apparent, both the main inert gas flow from the inert gas inlet nozzle to the inert gas outlet nozzle and the inert gas jet stream are "inert gas streams" the terms main inert gas stream and inert gas jet stream are used only to enable to linguistically distinguish these. Alternatively, one could have used first gas stream and second gas stream, but we consider the initially suggested wording to be more vivid. As apparent, in a preferred example the second inert gas stream (i.e. the inert gas jet stream) has a higher flow speed across the volume than the first (main) inert gas stream. The flow rate of the second inert gas stream may be higher than the first (=main) inert gas stream. Hence "main" does not have any implications regarding the amount of gas flowing per unit of time compared to other inert gas streams.

An additive manufacturing apparatus according to the invention may of course comprise the process chamber with at least one of the above explained features. In particular, the additive manufacturing apparatus may have one laser beam entry window and outside the process chamber, in front of the at least one window at least two (laser) beam sources each configured to emit at least one (laser) beam to a powder bed on top of the support. It is implicit that the window is at least essentially transparent for the beams being emitted by the (laser) beam sources through the at least one window towards the support. In a preferred example, the additive manufacturing apparatus is configured to scan a surface of a powder bed being below a smoke plume being produced by operation of a first (laser) beam source. This measure even allows to increase workpiece quality, e.g. by optimizing the thermal stress to the workpiece during manufacturing.

**Description of Drawings**

In the following, the invention will be described by way of example, without limitation of the general inventive concept, on examples of embodiment with reference to the drawing.

Figure 1 shows an example process chamber of an additive manufacturing apparatus.

Figure 2 shows another example process chamber of an additive manufacturing apparatus.

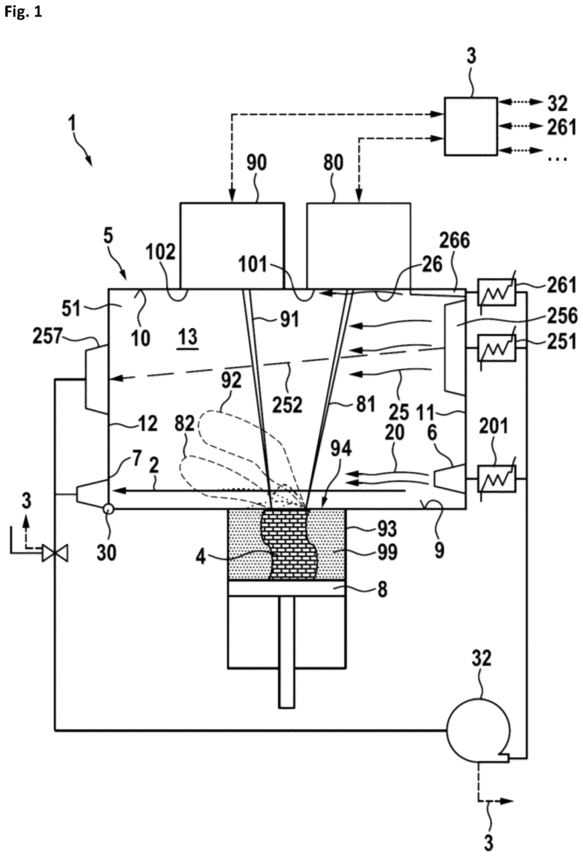

In figure 1 is a simplified sectional view of an example additive manufacturing apparatus 1 with a process chamber 5. The process chamber 5 has a volume 51 being enclosed by side walls 11, 12, 13 (a fourth side wall is not visible), a ceiling 10 and a bottom 9. The bottom 9 has an opening 94 with opening walls 93. The opening walls 93 may provide a linear bearing for a movably supported support 8, which can be lowered and raised. On top of the support 8 may be an optional powder bed 99 in which a partially manufactured workpiece 4 may be embedded. The powder bed 99 and the workpiece 4 are depicted only as an example, but the additive manufacturing apparatus 1 and/or the process chamber 5 are/is typically delivered without any powder bed or workpiece.

The ceiling 10 has windows 101, 102, being transparent for beams 81, 91, being emitted by beam sources 80, 90. Depicted are a first beam source 80 and a second beam source 90 emitting the first and the second beam 81, 91, respectively. Preferably, the process chamber 5 has more than two beam sources 80, 90. The window 101, 102 can as well be unitary and hence there is at least one window above the opening 94 in the bottom.

An (first) inert gas inlet 6 in a front side wall 11 and an (first) inert gas outlet 7 in a rear side wall 12 enable to provide a main inert gas flow 20 across the opening 94 in the bottom 9, i.e. in a main inert gas flow direction 2. As can be seen, the main inert gas flow 20 may flow at least essentially parallel (i.e. $\pm\alpha_{ms}$ ($\alpha_{ms} \in \{30°, 20°, 10°, 5°, 2.5°, 1°, 0.5°, 0°\}$) to the bottom 9 and hence at least essentially parallel to the powder bed surface and the powder bed supporting surface of the support 8. In the depicted example, the main inert gas flow direction 2 has a small downward component. Preferably, the inert gas comprises at least 20% Helium (He), and/or has a density below 1.4kg/cm and/or a temperature above the dew point of the gas. In an example the pressure may be at or above ambient pressure. In another example the pressure may be at or below ambient pressure.

Above the main inert gas inlet 6 is at least one optional second inert gas inlet 256 and at least one optional third inert gas outlets 266. Above the main inert gas outlet 7 is at least one optional second inert gas outlet 257. These could as well be referred to as inert gas jet stream inlets or inert gas jet stream outlets, respectively.

In operation, a second inert gas stream may flow above the main (first) inert gas stream from the at least one optional second inert gas inlet 256 to the at least one optional second inert gas outlet 257. As indicated by arrows 25, the volume per amount of time, i.e. the flow rate and/or the flow speed of the optional second inert gas flow 25 are/is preferably higher than the flow rate, and/or the flow speed, respectively of the main inert gas flow 20. Further, the downward component of the flow direction of the second inert gas flow direction 252 is preferably greater than the downward component of main inert gas flow direction 2. The temperature of the second inert gas flow 25 is preferably below the temperature of the main inert gas flow 20.

The optional third inert gas inlet 266 is preferably located in the vicinity (within 10cm, 5cm, 2.5cm and/or 1cm) of the at least one window 101, 102 in the ceiling 10 and located to attach a third inert gas stream to the surface of the at least one window 101, 102, to thereby contribute to keep the at least one window 101, 102 clear of condensate. Preferably, the temperature of the inert gas exiting the third inert gas inlet is above the temperature of the second inert gas entering the volume 51 via the at least one second inert gas inlet 256.

As indicated, each of the beams 81, 91 is directed on a different location of the powder bed 99 and the fusing process produces first and a second smoke plumes 82, 92. As shown, the second beam 91 passes through the first smoke plume 82 originating from the interaction of the first beam 81 with the powder bed 99.

The inert gas is removed by at least one pump 32, i.e. the first and second inert gas outlets 7, 257 are in fluid communication with the lower pressure inlet of the gas pump 32 which then feeds the inert gas to at least one of the inert gas inlets 6, 256, 266 via a duct 33. The temperature of the different inert gas streams can be controlled preferably by optional indirect heat exchangers 201, 251, 261.

A controller 3 may be connected by data and/or power lines to the beam sources 80, 90, sensors like 30, the pump 32, valves 38, etc. Example connections are indicated by dashed or dotted arrows.

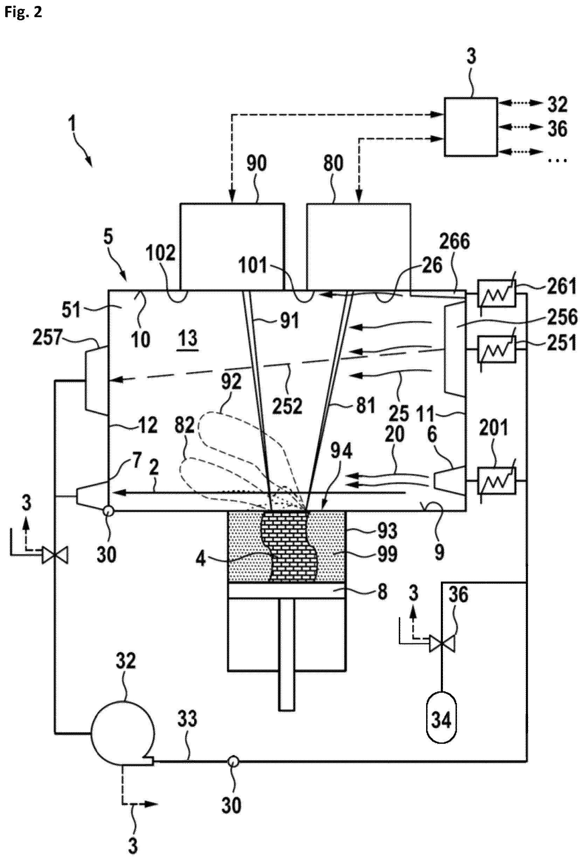

Figure 2 shows another simplified sectional view of an example additive manufacturing apparatus 1 with a process chamber 5. The description of figure 1 can as well be read on figure 2. Only differences will be explained herein. Similar to figure 1, at least one of the inert gas outlets 7 and 257 of the process chamber 5 may be connected via a duct 33 with at least one of the inert gas inlets 6, 256, 266. A pump 32 may have a pump inlet being in fluid communication with at least one of the inert gas outlets 6, 25 and a pump outlet may be in fluid communication with at least one of the inert gas inlets 6, 256, 266 via the duct 33. The duct may comprise a gas component sensor 30. The values measured by the gas component sensors 30, regardless of its position, may be provided to the controller 3 by some data line or any other communication means. The controller may as well be referred to as process chamber controlling device 3.

The process chamber housing preferably has at least one of these gas component sensors 30. In Fig. 2, two gas component sensors 30 are depicted at preferred positions for illustrative purposes. Other numbers of gas composition sensors can be used as well.

The process chamber housing may further comprise at least one inert gas component source 34. In an example, the inert gas component source 34 may comprise a tank being filled or configured to be filled with, e.g., He and/or Ne or another inert gas or inert gas mixture.

The inert gas component source 34 is fluidly connected via an inert gas component valve 26 with at least one of the inert gas inlets 6, 256, 266.

The controller 3 is preferably configured to monitor based on at least one measured value the concentration and/or or partial pressure of at least one of He and Ne in the inert gas in the process chamber 5 and/or the duct 33. Such measurement values can be retrieved from at least one of the at least one inert gas component sensors 30. If the concentration of He and Ne in the inert gas in the process chamber 5 depletes below a predefined lower limit, the controller may be configured to open the inert gas component valve 36, e.g. for a given duration. The duration may be calculated, e.g. based on the difference between the lower limit and the measured value. By opening the inert gas component valve 36, the depleted inert gas component may be provided to the inert gas being provided to the process chamber. Thereby, the concentration of the depleted component, in this example He and/or Ne can be corrected. Similarly, if a measured concentration of another component of the inert gas in the process chamber 5 and/or the duct is above an upper limit, the controller may open the inert gas component valve 36 to thereby reduce the concentration of the component having a concentration above its upper limit. The process chamber may have a number of inert gas component sources 34 being filled with different inert gases and corresponding inert gas component valves 36 to selectively replenish a depleted inert gas component.

**Clauses**

The following clauses summarize aspects of the invention. The wording and technical teaching provided by these clauses may be used to amend the claims of the present application and/or future divisional applications. In particular, these clauses may provide the basis for claims of potential future divisional applications and amendments thereof. The clauses and this paragraph may be cancelled from the present description when issuing a communication under R. 71(3) EPC. However, like any amendment of this application during its examination, such cancellation of the below clauses and of this paragraph shall not be interpreted as a waiver.

Clause 1. A process chamber housing (1) for an additive manufacturing apparatus, the process chamber housing (1) comprising a process chamber (5), wherein the process chamber housing (1) has at least:

- a bottom (9), a ceiling (10) and side walls (11, 12, 13), jointly enclosing a volume (51) of the process chamber (5),
- an inert gas inlet (6) configured to provide an inert gas into the process chamber (5),
- an inert gas outlet (7) configured to release the inert gas out of the process chamber (5), characterized in that
- the bottom (9) has an opening (94), being delimited by opening walls (93) and in that a vertically movable support (8) for supporting a three-dimensional object (4) is located in between of the opening walls (93), and/or in that
- the gas inlet (6) is configured to provide a light inert gas, having a density of less than 1,4 kg/m$^3$, into the process chamber (5).

Clause 2. The process chamber housing (1) of clause 1, characterized in that the inert gas inlet (6) and the inert gas outlet (7) are positioned at opposite sides of the process chamber and/or the opening (94), thereby being configured establish an inert gas flow (2) in a main flow direction (2) from the inert gas inlet (6) over the opening, to the inert gas outlet (7).

Clause 3. The process chamber housing (1) of clause 1 or 2, characterized in that the gas inlet (6) is connected to a He-Source and configured to provide He-gas from the He-source into the process chamber (5).

Clause 4. The process chamber housing (1) of one of the previous clauses, characterized in that the gas inlet is connected to a gas source providing a gas or gas mixture with a thermal conductivity of at least $0.1 \frac{W}{m \cdot K}$.

Clause 5. The process chamber housing (1) of at least one of the previous clauses, characterized in that the He-source provides a gas comprising at least one of 20%, 30%, 40%, 50%, 60%, 70%, 80%, 90%, 95%, 98%, 99% He, wherein the percentage relates to the amount mol He and/or Ne relative to the total amount of gas.

Clause 6. The process chamber housing (1) of at least one of the previous clauses, characterized in, that the inert gas flow in the main flow direction (2) has a flow speed and that the mean flow speed measured 0.5cm over the opening is above 0.75m/s and/or below 4 m/s.

Clause 7. The process chamber housing (1) of at least one of the previous clauses, characterized in that the process chamber (5) comprises at least one gas component concentration sensor, wherein at least one of the at least one gas component concentration sensor (30) is located

- on the bottom and/or
- in a recess of the bottom and/or
- below a distance of 5cm above the bottom and/or
- on the support and/or below the support, and/or
- at or within at least one of 10cm, 5cm, 2.5cm, 1cm, 0.5cm from an edge in the bottom encircling the opening, and/or
- in a duct 33 connecting the inert gas outlet (7) with the inert gas inlet (6).

Clause 8. The process chamber housing (1) of at least clause 7, characterized in that the process chamber housing further comprises at least one inert gas component source (34) being fluidly connected via an inert gas component valve (36) with the inert gas inlet (6) of the process chamber (5).

Clause 9. The process chamber housing (1) of at least one of the previous clauses, characterized in that the process chamber (5) comprises a heater (35) configured to heat the temperature of at least a portion of the inert gas flow through the process chamber to or above at least one of 25°C, 40°C, 60°C, 80°C, 100°C, 150°C, 250°C, 300°C, 350°C, 400°C, 450°C.

Clause 10. The process chamber housing (1) of at least one of the previous clauses, characterized in that the process chamber comprises a pressure controller, configured to maintain the pressure inside the process chamber below ambient pressure outside the process chamber and/or at or below at least one of 1000hPa, 900hPa, 800hPa, 700hPa, 600hPa, 500ha, 400hPa, 300hPa, 200hPa, 100hPa.

Clause 11. The process chamber housing (1) of one of the previous clauses, characterized in that the inert gas outlet (7) is in fluid communication with a vacuum pump and/or in that the inert gas inlet (6) is in fluid communication with an inert gas source, wherein a throttle valve is located upstream of the inert gas inlet.

Clause 12. The process chamber housing (1) of at least one of the previous clauses, characterized in that the process chamber further comprises:

- at least one second gas outlet in at least one of the bottom, the support, the opening walls, and the opening bottom and/or
- at least one second inert gas inlet in the ceiling.

Clause 13. The process chamber housing (1) of clause 12, characterized in that:

- the second gas outlet is connected to a second gas outlet control valve, preferably to a check valve configured to disable gas flow into the process chamber via the second gas outlet and/or
- the second gas outlet is connected to the gas inlet of a second outlet vacuum pump.

Clause 14. The process chamber housing (1) of at least one of the previous clauses, characterized in that it further comprises at least one laser beam entry window located above the opening (91).
Clause 15. The process chamber housing (1) of at least clause 14, characterized in that it further comprises:

- at least one inert gas jetstream inlet nozzle, positioned to provide an inert gas jet stream between the window and the support and/or
- at least one inert gas jetstream outlet nozzle, positioned to provide an inert gas jet stream between the window and the support.

Clause 16. The process chamber housing (5) of at least clause 15, characterized in that the at least one inert gas jet stream inlet nozzle has a nozzle outlet opening being oriented parallel within an angle $\alpha_{js}$ to the inert gas inlet, wherein $\alpha_{js} \in A$, and A = {30°, 20°, 10°, 5°, 2.5°, 1°, 0.5°, 0°}
Clause 17. An additive manufacturing apparatus characterized in that it comprises the process chamber housing (1) of at least one of the previous clauses.
Clause 18. The additive manufacturing apparatus of clause 17, characterized in that:

- the process chamber (5) has at least one laser beam entry window,
- outside of the process chamber (5), in front of the at least one window are at least two laser sources each configured to emit at least one laser beam to a powder bed on top of the support (8).

Clause 19. A method for fusing at least a portion of a layer of a powder bed comprising at least:

- emitting at least a first beam from a first beam source on first locations of a powder bed and at least a second beam from a second beam source onto second locations of the powder bed, wherein the first and second locations are different, thereby producing a first smoke plume and a second smoke plume, respectively;
- inclining the first and the second smoke plumes towards the horizontal by establishing an inert gas flow having a direction with a component being parallel to the powder bed,

characterized in that at least a portion of the second locations is selected to be positioned below the first smoke plume, wherein below indicates that the first smoke plume is in between of the second beam source and the portion of the second locations and/or in that the density of the inert gas flow is at or below 1.4 kg/m³ at normal conditions and/or at the conditions with a distance of 20mm above the layer.

Clause 20. The method of clause 19, characterized in that the method further comprises that:

the distance between the set of first locations and the set of second locations have a distance of less than at least one of 100mm, 70mm, 40mm, 30mm, 20mm and 10mm; and/or that
the distance between a first location and a second location is below at least one of 100mm, 70mm, 40mm, 30mm, 20mm, 10mm, wherein the temporal distance between the moments when the first and second beams are emitted to said first location and said second location is below at least one of 10%, 20%, 30%, 40%, 50%, 60%, 70% and 80% of the maximum time span the first beam or second beam is emitted onto the layer.

Clause 21. The method of clause 19 or 20, characterized in that the established inert gas flow comprises at least one of at least one of 20%, 30%, 40%, 50%, 60%, 70%, 80%, 90%, 95%, 98%, 99% He, wherein the percentage relates to the amount mol He and/or Ne relative to the total amount of gas.

Clause 22. The method of one of clauses 19 to 21, characterized in that the established inert gas flow has a temperature at or above at least one of 25°C, 40°C, 60°C, 80°C, 100°C, 150°C, 250°C, 300°C, 350°C, 400°C, 450°C.

Clause 23. A method for fusing at least a portion of a layer of a powder bed comprising at least:

emitting at least a first beam from a first beam source on first locations of a powder bed and preferably at least a second beam from a second beam source onto second locations of the powder bed, wherein the first and second locations are different, thereby producing a first smoke plume and optionally a second smoke plume, respectively;
inclining the first and the second smoke plumes towards the horizontal by establishing an inert gas flow having a direction with a component being parallel to the powder bed,
feeding at least a portion of the inert gas mixture being removed through an inert gas outlet (7, 257) to an inert gas inlet (6, 256, 266) of a process chamber, measuring a measurement value being representative for the concentration and/or partial pressure of at least one of $N_2$, He, Ne, Ar, Kr and Xe in the inert gas mixture being removed from the process chamber or being in the process chamber,
comparing this measurement value with a lower limit and/or with an upper limit for the concentration and/or the partial pressure of at least one of $N_2$, He, Ne, Ar, Kr and Xe in the inert gas mixture, and
in case said comparing provides that this measurement value is below a lower limit, the method further comprises adding the corresponding component to the inert gas mixture, while adding no or less of at least one other component of the inert gas mixture to the inert gas mixture and/or,
in case said comparing provides that this measurement value is above an upper limit, the method further comprises adding at least one other component than said component having a measurement value above the upper limit to the inert gas mixture, while adding no or less of said component having a measurement value above the upper limit to the inert gas mixture.

### List of reference numerals

| 1 | additive manufacturing apparatus |
|---|---|
| 2 | main inert gas flow direction |
| 3 | controller / process chamber controlling device |
| 4 | workpiece / adhered moieties of raw material |
| 5 | process chamber |
| 6 | gas inlet |
| 7 | gas outlet |
| 8 | support |
| 9 | bottom |
| 10 | ceiling |
| 101 | window |
| 102 | window |
| 11 | first sidewall |
| 12 | second sidewall |
| 13 | third sidewall |
| 20 | main inert gas flow |
| 201 | heat exchanger |
| 25 | second inert gas flow (inert gas jet stream flow) |
| 251 | heat exchanger |
| 252 | direction of second inert gas flow |
| 256 | second inert gas inlet |
| 257 | second inert gas outlet |
| 26 | third inert gas flow |
| 261 | heat exchanger |
| 266 | third inert gas inlet |
| 30 | gas component sensor, e.g. oxygen sensor and/or a gas density sensor and/or gas component concentration sensor, |
| 32 | pump |
| 33 | duct |
| 34 | inert gas component source |
| 35 | heater |
| 36 | inert gas component valve |
| 80 | first beam source |
| 81 | first beam / first laser beam |

82    first smoke plume
90    second beam source
91    first beam / first laser beam
92    second smoke plume
93    opening walls
94    support opening in bottom 9, configured to receive support 8
99    powder bed

**Claims**

1.  A process chamber housing (1) for an additive manufacturing apparatus, the process chamber housing (1) comprising a process chamber (5), wherein the process chamber housing (1) has at least:

    - a bottom (9), a ceiling (10) and side walls (11, 12, 13), jointly enclosing a volume (51) of the process chamber (5),
    - a first inert gas inlet (6) configured to provide an inert gas into the process chamber (5),
    - at least one beam entry window,
    - a first inert gas outlet (7) configured to release the inert gas out of the process chamber (5),wherein the inert gas inlet and the inert gas outlet are positioned at opposite sides of the opening and face towards each other and are configured to provide a main inert gas flow in a main flow direction by injecting the inert gas via the first inert gas inlet while removing inert gas from the volume via the first inert gas outlet,
    - the bottom (9) has an opening (94), being delimited by opening walls (93) and in that a vertically movable support (8) for supporting a three-dimensional object (4) is located in between of the opening walls (93),

    **characterized in that** the process chamber housing (1) further comprises at least one inert gas jetstream inlet nozzle, positioned to provide an inert gas jet stream between the window and the support and/or at least one inert gas jetstream outlet nozzle, positioned to provide an inert gas jet stream between the window and the support.

2.  The process chamber housing (1) of claim 1, **characterized in that** the inert gas jet stream has a higher flow speed across the volume (51) than the main inert gas stream and/or **in that** the flow rate of the inert gas jet stream is higher than the main inert gas stream.

3.  The process chamber housing (1) of one of the previous claims3, **characterized in, that**:

    - the gas inlet (6) is connected to a He-Source and configured to provide He-gas from the He-source into the process chamber (5) and/or

    - the gas inlet is connected to a gas source providing a gas or gas mixture with a thermal conductivity of at least $0.1\frac{W}{m\cdot K}$, and/or
    - the gas inlet (6) is configured to provide a light inert gas, having a density of less than 1,4 kg/m$^3$, into the process chamber (5).

4.  The process chamber housing (1) of at least one of the previous claims, **characterized in, that** the He-source provides a gas comprising at least one of 20%, 30%, 40%, 50%, 60%, 70%, 80%, 90%, 95%, 98%, 99% He, wherein the percentage relates to the amount mol He and/or Ne relative to the total amount of gas.

5.  The process chamber housing (1) of at least one of the previous claims, **characterized in that** the main inert gas flow in the main flow direction (2) has a flow speed and that the mean flow speed measured 0.5cm over the opening is:

    - above 0.75m/s and/or
    - below 4 m/s

6.  The process chamber housing (1) of at least one of the previous claims, **characterized in that** the process chamber (5) comprises at least one gas component concentration sensor, wherein at least one of the at least one gas component concentration sensor (30) is located:

    - on the bottom and/or
    - in a recess of the bottom and/or
    - below a distance of 5cm above the bottom and/or
    - on the support and/or below the support, and/or
    - at or within at least one of 10cm, 5cm, 2.5cm, 1cm, 0.5cm from an edge in the bottom encircling the opening, and/or
    - in a duct 33 connecting the inert gas outlet (7) with the inert gas inlet (6).

7.  The process chamber housing (1) of at least claim 7, **characterized in that** the process chamber housing further comprises at least one inert gas component source (34) being fluidly connected via an inert gas component valve (36) with the inert gas inlet (6) of the process chamber (5).

8.  The process chamber housing (1) of at least one of the previous claims, **characterized in that** the process chamber (5) comprises:

    - a heater (35) configured to heat the temperature of at least a portion of the inert gas flow through the process chamber to or above at least one of 25°C, 40°C, 60°C, 80°C, 100°C, 150°C, 250°C, 300°C, 350°C, 400°C, 450°C
and /or
- a pressure controller, configured to maintain the pressure inside the process chamber below ambient pressure outside the process chamber and/or at or below at least one of 1000hPa, 900hPa, 800hPa, 700hPa, 600hPa, 500ha, 400hPa, 300hPa, 200hPa, 100hPa.

9. The process chamber housing (1) of one of the previous claims, **characterized in that** the inert gas outlet (7) is in fluid communication with a vacuum pump and/or **in that** the inert gas inlet (6) is in fluid communication with an inert gas source, wherein a throttle valve is located upstream of the inert gas inlet.

10. The process chamber housing (1) of at least one of the previous claims, **characterized in that** the process chamber further comprises:

    - at least one second gas outlet in at least one of the bottom, the support, the opening walls, and the opening bottom and/or
    - at least one second inert gas inlet in the ceiling.

11. The process chamber housing (1) of claim 12, **characterized in that** the second gas outlet is connected to:

    - a second gas outlet control valve, preferably to a check valve configured to disable gas flow into the process chamber via the second gas outlet and/or
    - the gas inlet of a second outlet vacuum pump.

12. The process chamber housing (1) of at least one of the previous claims, **characterized in that** the beam entry window located above the opening (91) and is a laser beam entry window.

13. The process chamber housing (5) of one of the previous claims, **characterized in that** the at least one inert gas jet stream inlet nozzle has a nozzle outlet opening being oriented parallel within an angle $\alpha_{js}$ to the first inert gas inlet, wherein $\alpha_{js} \in A$, and A = {30°, 20°, 10°, 5°, 2.5°, 1°, 0.5°, 0°}

14. An additive manufacturing apparatus, **characterized in that** it comprises the process chamber housing (1) of at least one of the previous claims.

15. The additive manufacturing apparatus of claim 14, **characterized in that** outside of the process chamber (5), in front of the at least one window are at least two laser sources each configured to emit at least one laser beam to a powder bed on top of the support (8).

16. A method for fusing at least a portion of a layer of a powder bed comprising at least:

    - emitting at least a first beam from a first beam source on first locations of a powder bed and at least a second beam from a second beam source onto second locations of the powder bed, wherein the first and second locations are different, thereby producing a first smoke plume and a second smoke plume, respectively;
    - inclining the first and the second smoke plumes towards the horizontal by establishing a main inert gas flow having a direction with a component being parallel to the powder bed,

    **characterized in that**
    an inert gas jet stream is provided between the window and the support by an inert gas jet stream inlet nozzle and an inert gas jet stream outlet nozzle.

17. The method of claim 16, **characterized in that** the method further comprises that:

    - the inert gas jet stream has a higher flow speed across the volume (51) than the main inert gas stream and/or **in that** the flow rate of the inert gas jet stream is higher than the main inert gas stream; and/or
    - the distance between the set of first locations and the set of second locations have a distance of less than at least one of 100mm, 70mm, 40mm, 30mm, 20mm and 10mm; and/or
    - the distance between a first location and a second location is below at least one of 100mm, 70mm, 40mm, 30mm, 20mm, 10mm, wherein the temporal distance between the moments when the first and second beams are emitted to said first location and said second location is below at least one of 10%, 20%, 30%, 40%, 50%, 60%, 70% and 80% of the maximum time span the first beam or second beam is emitted onto the layer.

18. The method of claim 16 or 17, **characterized in that**:

    - the established main inert gas flow comprises at least one of at least one of 20%, 30%, 40%, 50%, 60%, 70%, 80%, 90%, 95%, 98%, 99% He, wherein the percentage relates to the amount mol He and/or Ne relative to the total amount of gas, and/or
    - the established main inert gas flow has a temperature at or above at least one of 25°C, 40°C, 60°C, 80°C, 100°C, 150°C, 250°C, 300°C, 350°C, 400°C, 450°C.

**Fig. 1**

**Fig. 2**

Europäisches
Patentamt

European
Patent Office

Office européen
des brevets

**EUROPEAN SEARCH REPORT**

**Application Number**

EP 25 16 9196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2002/152002 A1 (TRUMPF WERKZEUGMASCHINEN GMBH [DE]) 17 October 2002 (2002-10-17) * paragraph [0040]; figure 1 * * paragraph [0043] * * paragraph [0041] * | 1-18 | INV. B22F10/322 B22F10/28 B22F10/85 B22F12/70 B29C64/153 B29C64/371 |
| A | WO 2018/118232 A1 (GEN ELECTRIC [US]) 28 June 2018 (2018-06-28) * page 1, paragraph 17 * * paragraph [0032]; figure 2 * * paragraph [0011]; figure 2 * * paragraph [0021] * * paragraph [0036] * * paragraph [0050] * * paragraph [0042] * * paragraph [0035] * * figure 1 * | 1-18 | B33Y10/00 B33Y30/00 B33Y50/02 B22F12/45 B22F10/77 |
| A | WO 2020/126086 A1 (LINDE AG [DE]) 25 June 2020 (2020-06-25) * page 4, line 1 * | 1-18 | |
| | | | TECHNICAL FIELDS SEARCHED (IPC) |
| X | WO 2020/022172 A1 (MITSUBISHI HITACHI POWER SYS [JP]) 30 January 2020 (2020-01-30) | 1-5, 9-14, 16-18 | B22F B29C B33Y C22C |
| Y | * the whole document * | 6-8 | |
| A | | 15 | |
| | & US 2021/268588 A1 (HIGASHI KEI [JP] ET AL) 2 September 2021 (2021-09-02) * paragraph [0050] * * paragraph [0077] * * paragraph [0079] * * paragraph [0052]; figure 1 * * paragraph [0046] * * paragraph [0011] * * paragraph [0021] * | | |

-/--

The present search report has been drawn up for all claims

| Place of search | Date of completion of the search | Examiner |
|---|---|---|
| The Hague | 4 July 2025 | Mensink, Rob |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

**EUROPEAN SEARCH REPORT**

**Application Number**

EP 25 16 9196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 6 631767 B1 (MITSUBISHI ELECTRIC CORP [JP]) 15 January 2020 (2020-01-15) <br> * paragraph [0002] * <br> * paragraph [0022] * | 1-18 | |
| A | US 2018/186081 A1 (MILSHTEIN EREL [US] ET AL) 5 July 2018 (2018-07-05) <br> * paragraph [0005] * <br> * figure 1 * <br> * paragraph [0026] * <br> * paragraph [0002] * <br> * paragraph [0202] * | 1-18 | |
| A | WO 2020/178216 A1 (SLM SOLUTIONS GROUP AG [DE]) 10 September 2020 (2020-09-10) <br> * figures 16-17 * <br> * page 1, line 20 - line 25 * | 1-18 | |
| X | US 2019/232429 A1 (BULLER BENYAMIN [US] ET AL) 1 August 2019 (2019-08-01) | 1-6, 9-11, 14-18 | |
| Y | * figure 4 * | 7,8 | TECHNICAL FIELDS SEARCHED (IPC) |
| A | * paragraph [0029] * <br> * page 1, paragraph 36 * <br> * paragraph [0039] * | 12,13 | |
| Y | US 2020/031054 A1 (PRÖBSTLE MARTIN [DE] ET AL) 30 January 2020 (2020-01-30) <br> * figure 2 * <br> * paragraph [0009] * <br> * paragraph [0042] * <br> * paragraph [0035]; figure 1 * <br> * paragraph [0014] * | 7 | |
| A | US 2021/114109 A1 (PAUZON CAMILLE [SE] ET AL) 22 April 2021 (2021-04-22) <br> * the whole document * | 1-18 | |

-/--

The present search report has been drawn up for all claims

| Place of search | Date of completion of the search | Examiner |
|---|---|---|
| The Hague | 4 July 2025 | Mensink, Rob |

page 2 of 3

18

Europäisches
Patentamt

European
Patent Office

Office européen
des brevets

**EUROPEAN SEARCH REPORT**

Application Number

EP 25 16 9196

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2018 128543 A1 (SODICK CO LTD [JP]) 23 May 2019 (2019-05-23) * the whole document * | 1-18 | |
| Y | EP 3 797 903 A1 (LINDE GMBH [DE]) 31 March 2021 (2021-03-31) * paragraphs [0024], [0064] * | 6,7 | |
| A | WO 2016/102970 A1 (RENISHAW PLC [GB]) 30 June 2016 (2016-06-30) * the whole document * | 1-18 | |

TECHNICAL FIELDS
SEARCHED    (IPC)

The present search report has been drawn up for all claims

| Place of search | Date of completion of the search | Examiner |
|---|---|---|
| The Hague | 4 July 2025 | Mensink, Rob |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 16 9196

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | | Publication date | Patent family member(s) | | Publication date |
|---|---|---|---|---|---|
| US 2002152002 | A1 | 17-10-2002 | EP | 1234625 A1 | 28-08-2002 |
| | | | JP | 2002332504 A | 22-11-2002 |
| | | | US | 2002152002 A1 | 17-10-2002 |
| WO 2018118232 | A1 | 28-06-2018 | CN | 110099785 A | 06-08-2019 |
| | | | EP | 3558636 A1 | 30-10-2019 |
| | | | US | 2018178285 A1 | 28-06-2018 |
| | | | WO | 2018118232 A1 | 28-06-2018 |
| WO 2020126086 | A1 | 25-06-2020 | EP | 3670031 A1 | 24-06-2020 |
| | | | WO | 2020126086 A1 | 25-06-2020 |
| WO 2020022172 | A1 | 30-01-2020 | CN | 112351848 A | 09-02-2021 |
| | | | DE | 112019003725 T5 | 08-04-2021 |
| | | | JP | 7199173 B2 | 05-01-2023 |
| | | | JP | 2020015931 A | 30-01-2020 |
| | | | KR | 20210011421 A | 01-02-2021 |
| | | | US | 2021268588 A1 | 02-09-2021 |
| | | | WO | 2020022172 A1 | 30-01-2020 |
| JP 6631767 | B1 | 15-01-2020 | CN | 113677475 A | 19-11-2021 |
| | | | DE | 112019007022 T5 | 25-11-2021 |
| | | | JP | 6631767 B1 | 15-01-2020 |
| | | | JP | WO2020213051 A1 | 06-05-2021 |
| | | | US | 2022088712 A1 | 24-03-2022 |
| | | | WO | 2020213051 A1 | 22-10-2020 |
| US 2018186081 | A1 | 05-07-2018 | US | 2018186067 A1 | 05-07-2018 |
| | | | US | 2018186080 A1 | 05-07-2018 |
| | | | US | 2018186081 A1 | 05-07-2018 |
| | | | US | 2018186082 A1 | 05-07-2018 |
| | | | US | 2024059019 A1 | 22-02-2024 |
| | | | WO | 2018129089 A1 | 12-07-2018 |
| WO 2020178216 | A1 | 10-09-2020 | CN | 113543910 A | 22-10-2021 |
| | | | EP | 3934833 A1 | 12-01-2022 |
| | | | JP | 7407832 B2 | 04-01-2024 |
| | | | JP | 2022523412 A | 22-04-2022 |
| | | | US | 2022193769 A1 | 23-06-2022 |
| | | | WO | 2020178216 A1 | 10-09-2020 |
| US 2019232429 | A1 | 01-08-2019 | US | 2019232429 A1 | 01-08-2019 |
| | | | US | 2023356330 A1 | 09-11-2023 |
| US 2020031054 | A1 | 30-01-2020 | CN | 110843210 A | 28-02-2020 |
| | | | EP | 3599082 A1 | 29-01-2020 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 16 9196

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | | Publication date | Patent family member(s) | | Publication date |
|---|---|---|---|---|---|
| | | | US | 2020031054 A1 | 30-01-2020 |
| US 2021114109 | A1 | 22-04-2021 | CN | 112399897 A | 23-02-2021 |
| | | | EP | 3628419 A1 | 01-04-2020 |
| | | | EP | 3856437 A1 | 04-08-2021 |
| | | | US | 2021114109 A1 | 22-04-2021 |
| | | | WO | 2020064148 A1 | 02-04-2020 |
| DE 102018128543 | A1 | 23-05-2019 | DE | 102018128543 A1 | 23-05-2019 |
| | | | JP | 6405028 B1 | 17-10-2018 |
| | | | JP | 2019094515 A | 20-06-2019 |
| | | | US | 2019151945 A1 | 23-05-2019 |
| EP 3797903 | A1 | 31-03-2021 | EP | 3797903 A1 | 31-03-2021 |
| | | | WO | 2021058134 A1 | 01-04-2021 |
| WO 2016102970 | A1 | 30-06-2016 | CA | 2971675 A1 | 30-06-2016 |
| | | | CN | 107257729 A | 17-10-2017 |
| | | | EP | 3237177 A1 | 01-11-2017 |
| | | | ES | 2741528 T3 | 11-02-2020 |
| | | | JP | 2018501132 A | 18-01-2018 |
| | | | PL | 3237177 T3 | 30-08-2019 |
| | | | US | 2018043614 A1 | 15-02-2018 |
| | | | WO | 2016102970 A1 | 30-06-2016 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018156264 A1
- WO 2017143145 A1
- EP 1234625 A
- DE 102006056422 B3
- EP 3321003 A
- WO 20123828 A1
- WO 2020064147 A1
- WO 2020064148 A1
- WO 2020126086 A1
- WO 2016075026 A
- WO 2020178216 A